# FASCICULE DE BREVET EUROPEEN

(11) **EP 2 739 963 B1**
(45) Date de publication et mention de la délivrance du brevet: **06.09.2017**
(21) Numéro de dépôt: 12750454.6
(22) Date de dépôt: 31.07.2012
(51) Int. Cl.: G01N 27/22, G01N 33/28

(54) **CAPTEUR MULTI-ELECTRODE POUR DETERMINER LA TENEUR EN GAZ DANS UN ECOULEMENT DIPHASIQUE**
MULTIELEKTRODENSENSOR ZUR MESSUNG DER GASKONZENTRATION IN EINEM BIPHASISCHEN, FLIESSENDEN FLUID.
MULTI-ELECTRODE SENSOR FOR MEASURING GAS CONCENTRATION IN A BIPHASIC FLOW

(30) Priorité: 02.08.2011 FR 1157084
(43) Date de publication de la demande: 11.06.2014
(73) Titulaire: SNECMA, 75015 Paris (FR); Centre National d'Etudes Spatiales, 75039 Paris Cedex 01 (FR)
(72) Inventeur: NIVET, Philippe, 27420 Cantiers (FR); BRUERE, Alain, 92290 Chatenay Malabry (FR); MATARIN, Didier, 27950 Saint Marcel (FR)
(74) Mandataire: Catania, Olivier Emmanuel
(86) Numéro de dépôt international: PCT/FR2012/051802
(87) Numéro de publication internationale: WO 2013/017795

(56) Documents cités:
- EP-A2- 0 936 462
- US-A- 3 123 751
- US-A- 3 421 077
- US-A- 4 074 184
- US-A- 4 555 661
- US-A- 4 835 456
- US-A- 5 861 755

## Description

La présente invention concerne le domaine des capteurs pour déterminer la teneur en gaz d'un fluide diphasique circulant dans une ligne d'écoulement installée dans toute application industrielle, par exemple dans un moteur de fusée ou autre.

La connaissance de la proportion volumique de gaz présent dans un liquide trouve de nombreuses applications, en particulier celles du domaine de l'aérospatiale.

Par exemple, les turbopompes qui équipent les moteurs d'une fusée sont alimentées par des ergols cryogéniques, en particulier de l'hydrogène liquide et de l'oxygène liquide. Aux entrées des pompes, la présence de gaz dans le liquide perturbe les écoulements avec le risque de créer des phénomènes de cavitation entraînant un départ en survitesse des turbopompes. L'intérêt de pouvoir identifier et mesurer la présence de gaz dans les ergols d'alimentation est par conséquent très important dans le cadre de cette application.

On connaît des capteurs capacitifs conventionnels à deux électrodes aptes à être disposés dans une conduite, dans le flux d'un fluide diphasique circulant dans la conduite. Une première des deux électrodes constitue une anode en forme de noyau cylindrique, tandis que l'autre électrode constitue une cathode formant une partie d'un tronçon de la conduite.

Ces capteurs capacitifs conventionnels sont configurés pour mesurer la permittivité relative (ou constante diélectrique) du fluide diphasique s'écoulant dans la conduite entre la cathode et l'anode, ce qui permet de déterminer la proportion volumique de gaz présent dans la phase liquide du fluide.

Plus précisément, la constante diélectrique d'un fluide dépend directement de son indice optique. Or il s'avère que l'indice optique d'un fluide à l'état gazeux diffère généralement légèrement de l'indice optique de ce fluide pris à l'état liquide, de sorte que la connaissance préalable de ces deux indices optiques et la mesure de la constante diélectrique du fluide s'écoulant dans un état diphasique, au moyen d'un tel capteur capacitif disposé dans la conduite d'écoulement, permet de déterminer le taux de bulles de gaz présentes dans la phase liquide du fluide.

Toutefois, les taux de bulles de gaz mesurés par ces capteurs conventionnels sont imprécis par rapport aux taux réels de bulles se formant dans la section d'écoulement des tronçons de conduite dans lesquels sont installés ces capteurs.

Ceci est d'autant plus problématique que les taux de bulles de gaz mesurés par ces capteurs conventionnels correspondent à des taux moyennés sur toute la section d'écoulement du capteur, de sorte que ces taux mesurés ne permettent pas de déceler les éventuelles proliférations de bulles de gaz qui seraient très localisées.

Il existe par conséquent un besoin pressant pour la mise au point d'un capteur capable de mesurer précisément les taux moyens et locaux de bulles de gaz se formant au sein d'une section d'écoulement donnée.

La présente invention propose de réaliser un tel capteur.

Plus précisément, un capteur au sens de la présente invention permet la détermination de la teneur en gaz d'un fluide diphasique circulant dans une ligne d'écoulement, le capteur comprenant une manchette apte à être disposée dans la ligne d'écoulement, dans le flux du fluide. La manchette du capteur comprend une pluralité d'électrodes de mesure qui s'étendent à distance et en regard les unes des autres de manière à délimiter deux à deux plusieurs espaces de subdivision de la section d'écoulement de ladite manchette. Le capteur comprend en outre des organes de commutation et de mesure qui sont couplés aux électrodes de mesure de manière à commander la commutation de chaque espace de subdivision de la manchette entre d'une part un état mesurant dans lequel lesdits organes appliquent un signal électrique d'excitation entre les deux électrodes de mesure adjacentes délimitant un espace de subdivision considéré et mesurent une valeur représentative du signal électrique de réception résultant de l'application dudit signal électrique d'excitation pour déterminer la teneur en gaz du fluide qui est associée à cette valeur représentative, et d'autre part un état non mesurant. Les organes de commutation et de mesure sont configurés pour sélectivement commuter l'état de chacun des espaces de subdivision indépendamment les uns des autres.

On comprend que la manchette du capteur comporte ainsi trois électrodes de mesure ou plus qui permettent de subdiviser la section d'écoulement de ladite manchette en deux espaces de subdivision ou plus, lesquels espaces correspondent aux espaces inter-électrode que délimitent deux à deux les électrodes de mesure.

Ainsi, à sections d'écoulements égales et toutes autres choses égales par ailleurs, la distance inter-électrode de la manchette d'un capteur selon la présente invention est plus petite que celle d'un capteur conventionnel à deux électrodes du type précédemment décrit, ce qui permet de mesurer des signaux avec un meilleur rapport signal sur bruit donc plus précis.

En outre, la présence de plusieurs espaces de subdivision résultant de l'équipement du capteur avec un plus grand nombre d'électrodes de mesure est avantageusement mise à profit dans la présente invention pour pouvoir mesurer précisément des taux de bulles de gaz se formant localement dans un seul ou plusieurs de ces espaces de subdivision, que l'on sélectionne par le jeu des commutations entre états mesurant et non mesurant qui peuvent être effectuées arbitrairement et de façon indépendantes pour chacun des espaces de subdivision de la manchette du capteur.

Par ailleurs, pour qu'un espace de subdivision considéré adopte son état non mesurant, on peut en particulier configurer les organes de commutation et de mesure de manière à empêcher l'établissement d'une excitation électrique entre les deux électrodes de mesure adjacentes délimitant ledit espace de subdivision considéré.

Plusieurs alternatives peuvent être mises en oeuvre pour permettre à un espace de subdivision considéré d'adopter son état non mesurant.

Ainsi, selon une première alternative avantageuse, les organes de commutation et de mesure appliquent un même potentiel électrique aux deux électrodes de mesure adjacentes délimitant l'espace de subdivision considéré pour que cet espace adopte son état non mesurant.

On comprend ainsi qu'aussi longtemps que cet espace de subdivision reste dans son état non mesurant, la différence de potentiel aux bornes des deux électrodes de mesure qui le délimitent est maintenue à une valeur nulle (en pratique, cette différence de potentiel est maintenue à une valeur aussi voisine de zéro que le permettent les organes de commutation et de mesure équipant le capteur).

Il en résulte que lesdites deux électrodes de mesure adjacentes sont maintenues dans un état forcé empêchant l'établissement d'une excitation électrique entre ces deux électrodes.

Selon une autre alternative avantageuse, les organes de commutation et de mesure coupent toute liaison électrique entre les deux électrodes de mesure adjacentes délimitant l'espace de subdivision considéré pour que cet espace adopte son état non mesurant.

Dans ce cas, les organes de commutation et de mesure peuvent rétablir cette liaison électrique lorsque cet espace de subdivision adopte son état mesurant, de manière à permettre l'établissement d'une excitation électrique entre les deux électrodes de mesure adjacentes délimitant ledit espace.

Avantageusement, le signal électrique d'excitation est une tension variable périodique en régime permanent, de préférence de valeur moyenne nulle. On peut en particulier utiliser une tension sinusoïdale, en créneau, en triangle, un train d'impulsions, ou autre.

Dans ce cas, le signal électrique de réception (de réponse) résultant de l'application dudit signal électrique d'excitation varie également périodiquement, avec une amplitude et/ou une période et/ou un décalage de phase par rapport au signal électrique d'excitation qui dépend(ent) de la constante diélectrique du fluide s'écoulant dans l'espace de subdivision considéré.

Toutefois, il n'est pas exclu du cadre de la présente invention d'appliquer entre les deux électrodes de mesure adjacentes délimitant l'espace de subdivision considéré une tension variable en régime non permanent, une tension fixe, ou un signal d'une toute autre nature, pourvu seulement que ce signal électrique d'excitation provoque à au moins un instant donné un déplacement de charges entre les deux électrodes de mesure de l'espace de subdivision considéré qui permette la détermination de la constante diélectrique du fluide s'écoulant dans l'espace de subdivision considéré.

Par ailleurs, les organes de commutation et de mesure peuvent avantageusement être configurés de manière à ce que ladite valeur représentative que lesdits organes mesurent soit représentative uniquement du signal électrique de réception résultant de l'application du signal électrique d'excitation entre les deux électrodes de mesure délimitant l'espace de subdivision considéré.

On comprend ainsi que ladite valeur représentative n'est pas influencée par la teneur en gaz du fluide s'écoulant dans le ou chaque autre espace de subdivision adjacent, et ce, quelque soit l'état de commutation dans lequel se trouve cet espace adjacent.

Selon une alternative avantageuse, les organes de commutation et de mesure peuvent être configurés de manière à ce que ladite valeur représentative comprenne une première composante représentative du signal électrique de réception résultant de l'application du signal électrique d'excitation entre les deux électrodes de mesure adjacentes délimitant l'espace de subdivision considéré, et une deuxième composante représentative du signal électrique de réception résultant de l'application de tout signal électrique d'excitation qui serait appliqué entre les deux électrodes de mesure adjacentes délimitant un autre espace de subdivision adjacent à l'espace considéré.

Pour ce faire, ladite valeur représentative peut par exemple être mesurée aux bornes d'un dipôle, de préférence résistif, couplé d'une part à l'électrode de mesure commune audit espace de subdivision considéré et audit espace adjacent et d'autre part à une ligne de potentiel fixe du capteur, en particulier la masse de ce dernier.

Dans ce cas, ladite valeur représentative mesurée aux bornes dudit dipôle correspond à son impédance, lorsqu'il est choisi d'appliquer un signal électrique d'excitation variant périodiquement en régime permanent.

Avantageusement, les organes de commutation et de mesure commutent séquentiellement au moins une fois l'état d'au moins un des espaces de subdivision au cours d'un cycle de mesure.

On comprend que l'on peut ainsi mettre à profit le fait que les organes de commutation et de mesure peuvent commuter chacun des espaces de subdivision de la manchette du capteur indépendamment les uns des autres pour définir un cycle de mesure au cours duquel au moins de ces espaces de subdivision subit séquentiellement une ou plusieurs commutation(s) d'état(s).

Dès lors, on peut définir n'importe quelle séquence de commutation devant être effectuée au cours d'un tel cycle de mesure.

Par exemple, il peut être avantageux que chaque espace de subdivision adopte au moins une fois son état mesurant au cours du cycle de mesure.

En effet, on peut dans ce cas balayer chacun des espaces de subdivision de la manchette du capteur au cours du cycle de mesure, ce qui permet de réaliser une cartographie précise de la répartition des bulles de gaz au sein de la section d'écoulement de ladite manchette.

De même, il peut être avantageux que le capteur adopte au cours du cycle de mesure au moins une configuration dans laquelle au moins un premier des espaces de subdivision adopte son état mesurant pendant qu'au moins un (de préférence chaque) autre espace de subdivision adjacent au premier adopte son état non mesurant.

Cette configuration est particulièrement avantageuse lorsque les organes de commutation et de mesure sont en outre configurés de manière à ce que la valeur représentative qu'ils mesurent comprenne des première et deuxième composantes représentatives des signaux électriques de réception associés respectivement audit premier espace de subdivision et audit espace de subdivision adjacent, comme précédemment décrit. En effet, dans cette configuration du capteur, ladite deuxième composante de la valeur représentative mesurée est nulle (en pratique aussi voisine de zéro que les organes de commutation et de mesure le permettent) dans cet état non mesurant dudit espace de subdivision adjacent. Il en résulte que la valeur représentative mesurée permet d'obtenir directement la constante diélectrique du fluide s'écoulant spécifiquement dans ledit premier espace de subdivision, et ce, sans que la teneur en gaz du fluide s'écoulant spécifiquement dans ledit autre espace de subdivision ne vienne influencer la mesure de ladite valeur représentative.

En outre, il peut être avantageux qu'à un premier instant du cycle de mesure au moins un premier des espaces de subdivision adopte son état mesurant pendant qu'un deuxième espace de subdivision adjacent au premier adopte son état non mesurant, et qu'à un deuxième instant (antérieur ou postérieur audit premier instant) dudit cycle au moins ledit premier espace demeure dans son état mesurant tandis que ledit deuxième espace adopte son état mesurant.

Dans ce cas, il est préférable que chaque éventuel espace de subdivision adjacent audit premier espace ou audit deuxième espace demeure dans un même état mesurant ou non mesurant (de préférence non mesurant) pendant les premier et deuxième instants.

Ainsi, lorsqu'il est en outre choisi que la valeur représentative associée audit premier espace de subdivision comprenne des première et deuxième composantes représentatives des signaux électriques de réception associés respectivement auxdits premier et deuxième espaces de subdivision, comme précédemment décrit, alors cette valeur représentative permet de déterminer au premier instant la constante diélectrique du fluide s'écoulant spécifiquement dans ledit premier espace, tandis que cette valeur représentative permet de déterminer au deuxième instant la constante diélectrique du fluide s'écoulant dans l'espace de réunion constitué par lesdits premier et deuxième espaces.

Dès lors, la constante diélectrique du fluide s'écoulant spécifiquement dans ledit deuxième espace de subdivision peut avantageusement être déduite des deux mesures précédentes, en effectuant la soustraction de la constante diélectrique obtenue au deuxième instant par la constante diélectrique obtenue au premier instant.

On comprend que les organes de commutation et de mesure peuvent ainsi avantageusement comprendre un circuit de mesure qui est mis en commun pour les premier et deuxième espaces de subdivision, et qui permet de déterminer les taux de bulles de gaz se formant spécifiquement dans ledit premier espace de subdivision et spécifiquement dans ledit deuxième espace de subdivision, tout en ne nécessitant la mise en oeuvre que d'une seule et unique commutation d'état, à savoir celle dudit deuxième espace entre lesdits premier et deuxième instants du cycle.

Avantageusement, au moins un premier des espaces de subdivision adopte un plus grand nombre de fois son état mesurant qu'au moins un autre des espaces de subdivision au cours du cycle de mesure.

On comprend qu'il est ainsi possible de surveiller plus attentivement certains des espaces de subdivision du capteur qui sont considérés comme davantage sujets à la formation de bulles de gaz que d'autres espaces du capteur jugés moins problématiques.

Avantageusement, le cycle de mesure est réalisé répétitivement, de préférence périodiquement.

On comprend ainsi que l'on peut suivre l'évolution de la répartition spatiale des bulles de gaz dans un ou plusieurs des espaces de subdivision de la manchette du capteur.

Avantageusement, la manchette du capteur comporte des électrodes de garde qui prolongent les extrémités des électrodes de mesure en étant électriquement dissociées de ces dernières, et qui sont couplées aux organes de commutation et de mesure de manière à ce que les électrodes de garde soient à tout instant au même potentiel électrique que les électrodes de mesure qu'elles prolongent respectivement.

On comprend que ces électrodes de garde permettent d'éviter les effets de bords qui affecteraient significativement la réponse des électrodes de mesure aux excitations électriques qu'elles subissent, lorsque les distances inter-électrode ne sont pas négligeables devant les dimensions de ces électrodes de mesure.

En outre, lorsqu'il est choisi d'exciter les électrodes de mesure du capteur avec des signaux électriques d'excitation en régime variable permanent, il est préférable pour améliorer la justesse des mesures que la fréquence, la phase et l'amplitude des potentiels électriques appliqués à ces électrodes de garde soient à tout instant identiques à la fréquence, la phase et l'amplitude des potentiels électriques auxquels se trouvent les électrodes de mesures qu'elles prolongent, respectivement.

Avantageusement, le capteur peut comprendre, au choix, un ou plusieurs élément(s) de structure apte(s) à coopérer avec les électrodes de mesure pour maintenir lesdites électrodes à distance et en regard les unes des autres.

Avantageusement, les électrodes de mesure s'étendent à distance les unes des autres par l'intermédiaire d'entretoises au moins en partie en matière électriquement isolante, par exemple en téflon (PTFE).

Avantageusement, lorsque la manchette du capteur comprend en outre des électrodes de garde, ces dernières peuvent être disposées à distance les unes des autres et prolonger les électrodes de mesures correspondantes par l'intermédiaire de ces entretoises.

Avantageusement, les entretoises présentent des passages à l'intérieur desquels des fils de liaison sont introduits de manière à assurer le couplage entre les électrodes de mesure (et leurs éventuelles électrodes de garde) et les organes de commutation et de mesure.

Il en résulte que la manchette du capteur peut ainsi être avantageusement disposée dans la ligne d'écoulement du fluide, par exemple et au choix, à l'intérieur d'un ou entre deux tronçon(s) de conduite de ladite ligne d'écoulement, tandis que les organes de commutation et de mesure sont aptes à être disposés à l'extérieur et à distance de ladite ligne d'écoulement de manière à pouvoir être plus aisément accessibles à l'utilisateur du capteur.

Par ailleurs, les électrodes de mesure (ainsi que leurs éventuelles électrodes de garde) peuvent adopter toutes formes propres, pourvu seulement qu'elles puissent s'étendre à distance et en regard les unes des autres de manière à délimiter deux à deux plusieurs espaces de subdivision de la section d'écoulement de la manchette du capteur.

Par exemple, les électrodes de mesure (de même que leurs éventuelles électrodes de garde) peuvent avantageusement être planes et parallèles entre elles.

Cette solution s'avère avantageuse lorsque la section d'écoulement de la ligne d'écoulement est rectangulaire.

Selon une alternative particulièrement avantageuse du fait que la section de la grande majorité des tronçons de conduites utilisés dans les lignes d'écoulement est circulaire, les électrodes de mesure (de même que leurs éventuelles électrodes de garde) peuvent être coaxiales, encloses les unes dans les autres autour d'un axe commun, et présenter une section circulaire dans un plan de section perpendiculaire à l'axe commun.

Dès lors, les électrodes de mesure (de même que leurs éventuelles électrodes de garde) peuvent avantageusement être, au choix, aussi bien tronconiques que cylindriques.

Avantageusement, le rapport des diamètres de deux électrodes de mesure adjacentes (et des éventuelles électrodes de garde correspondantes) dans le plan de section est compris entre 1,1 et 3,0, de manière à augmenter la précision des mesures.

En effet, les inventeurs de la présente invention ont pu découvrir, suite aux calculs théoriques, aux travaux expérimentaux, et aux nombreuses simulations numériques qu'ils ont conduits, que la constante diélectrique du fluide mesurée varie, de surcroît non linéairement, pour de mêmes taux et tailles de bulles de gaz, en fonction de la distance radiale à laquelle se forment localement ces bulles de gaz par rapport à l'axe commun des électrodes de mesure.

Les inventeurs ont en effet pu déterminer que ce phénomène est essentiellement dû au fait que le volume relatif occupé par une bulle par rapport au volume de l'espace annulaire de la manchette dans lequel cette bulle est confinée est d'autant plus important que le lieu de formation de cette bulle se rapproche radialement de cet axe commun de la manchette du capteur.

Les inventeurs ont alors trouvé une solution permettant de compenser cette dépendance radiale de la constante diélectrique expérimentale du fluide, en prévoyant que le rapport des diamètres de deux électrodes de mesure adjacentes dans le plan de section soit spécifiquement compris entre 1,1 et 3,0.

De préférence, ledit rapport des diamètres est compris spécifiquement entre 1,4 et 2,0 de manière à encore davantage augmenter la précision des mesures.

Par ailleurs, au sens de la présente invention, la manchette du capteur peut comprendre tout nombre d'électrodes de mesure supérieur ou égal à trois (par exemple trois, quatre, cinq, six, sept ou plus).

On comprend qu'à sections d'écoulement égales et toutes autres choses égales par ailleurs, plus la manchette du capteur comprend un grand nombre d'électrodes de mesure, plus les distances inter-électrode de ladite manchette sont réduites, et plus les mesures effectuées sont précises.

Cependant, afin que la structure du capteur reste simple de mise en oeuvre et bon marché, il est préférable que la manchette du capteur comprenne entre trois et six électrodes de mesure.

En cas d'utilisation d'un capteur dont les électrodes de mesure sont à symétrie de révolution, le rapport des diamètres dans le plan de section entre les deux électrodes de mesure extrémales de la manchette du capteur (i.e. les deux électrodes de mesure les plus éloignées l'une de l'autre) peut alors avantageusement être compris entre 5 et 20 en fonction du nombre d'électrodes de mesure de ladite manchette.

Par ailleurs, il est avantageux que le rapport de la longueur axiale des électrodes de mesure le long de leur axe commun sur le diamètre de l'électrode de mesure la plus éloignée de cet axe commun soit compris entre 0,25 et 1. En effet, cette plage de valeurs représente un bon compromis entre optimisation de la précision des mesures et minimisation des perturbations d'écoulement qu'engendre la présence de la manchette dans la ligne d'écoulement.

L'invention sera mieux comprise et ses avantages apparaîtront mieux à la lecture de la description détaillée qui suit, de modes de réalisation indiqués à titre d'exemples non limitatifs. La description se réfère aux dessins annexés sur lesquels :
- la figure 1 représente une vue en perspective illustrant la manchette d'un capteur conforme à la présente invention ;
- la figure 2 montre une vue de dessus de ladite manchette illustrée à la figure 1 ;
- la figure 3 est une vue en coupe de ladite manchette selon le plan III-III illustré à la figure 2 ;
- la figure 4 montre une vue en coupe de ladite manchette selon le plan IV-IV illustré à la figure 2, et met en évidence une possibilité de montage de cette manchette dans un tronçon de conduite d'une ligne d'écoulement ;
- la figure 5 représente une vue en perspective isolant l'une des électrodes de mesure de ladite manchette avec ses deux électrodes de garde ;
- la figure 6 représente une vue schématique de ladite manchette couplée à des organes de commutation et de mesure conformes à la présente invention.

Un capteur selon la présente invention comprend une manchette 10 et des organes de commutation et de mesure 50.

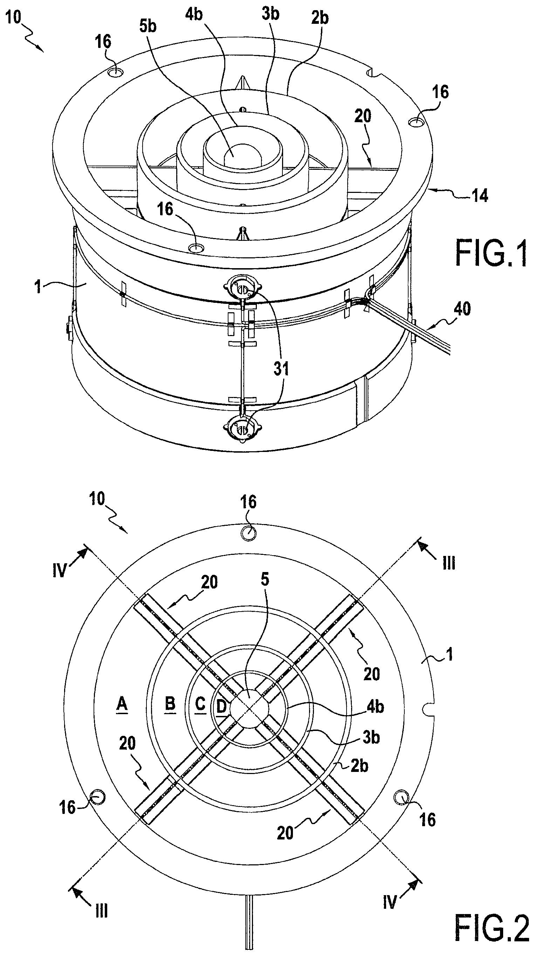

Aux figures 1 à 4, on a représenté un exemple de réalisation non limitatif d'une manchette 10 conforme à la présente invention.

Selon l'exemple illustré, la manchette 10 du capteur comprend cinq d'électrodes de mesure 1 à 5 qui s'étendent à distance et en regard les unes des autres de manière à délimiter deux à deux quatre espaces de subdivision A à D de la section d'écoulement de ladite manchette 10.

Les électrodes de mesure 1 à 5 sont coaxiales, encloses les unes dans les autres autour d'un axe commun définissant la direction axiale de la manchette 10, et présentent une section circulaire dans un plan de section perpendiculaire à cet axe commun.

Les électrodes de mesure 1 à 5 sont en outre cylindriques de révolution.

Le corps extérieur de la manchette 10 délimitant la section d'écoulement de cette dernière forme l'électrode de mesure 1 la plus éloignée de cet axe commun, de sorte que le corps extérieur de la manchette 10 est globalement cylindrique avec ledit axe commun en tant qu'axe de révolution.

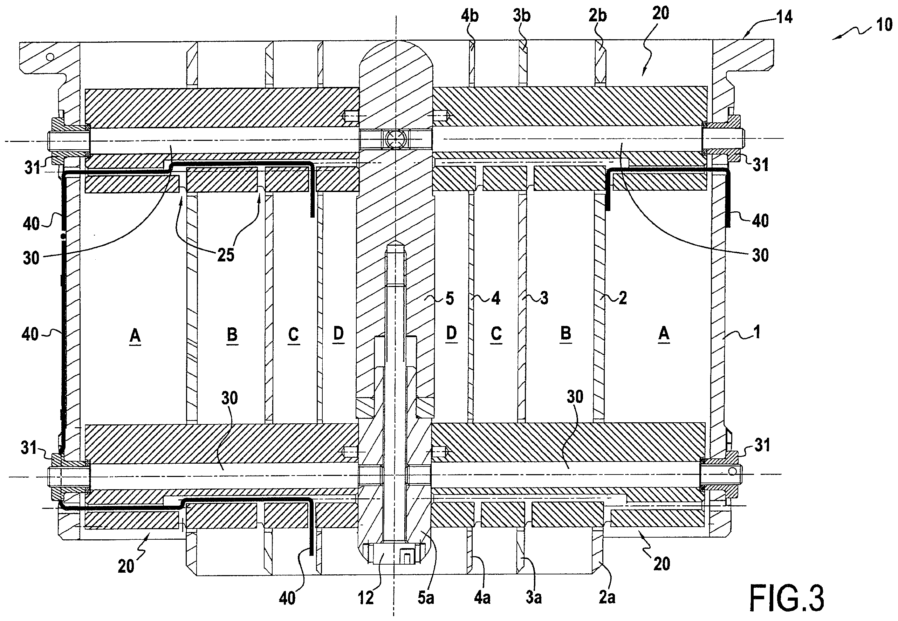

L'électrode de mesure 5 la plus proche de cet axe commun constitue un noyau central cylindrique (qui peut être complètement plein, complètement creux, ou bien seulement en partie creux comme illustré à la figure 3).

Les trois dernières électrodes de mesure 2, 3 et 4 sont des électrodes de mesure intermédiaires qui constituent respectivement des couronnes cylindriques qui s'étendent coaxialement entre le corps extérieur et le noyau central de la manchette 10, et qui sont encloses les unes dans les autres.

Les quatre espaces de subdivision A à D de la section d'écoulement de la manchette 10 que délimitent deux à deux les cinq électrodes de mesure 1 à 5 sont selon cet exemple des espaces annulaires cylindriques de révolution.

Selon l'exemple illustré, le rapport des diamètres de deux électrodes de mesure adjacentes dans ledit plan de section est compris entre 1,1 et 3,0, de préférence entre 1,4 et 2,0 (le diamètre le plus grand des deux étant donc mis au numérateur dans le calcul du rapport, et le diamètre le plus petit des deux étant mis au dénominateur dans ledit calcul), et encore plus particulièrement entre 1,5 et 1,9.

En particulier, il est choisi dans cet exemple que le diamètre intérieur de la première électrode de mesure 1 (i.e. le diamètre de la paroi intérieure du corps extérieur de la manchette 10) soit de 121 mm, tandis que le diamètre extérieur de la deuxième électrode de mesure 2 soit de 80 mm, de sorte que le rapport du diamètre de la première électrode de mesure 1 sur la deuxième électrode de mesure 2 est de 1,5 environ.

En outre, il est choisi dans cet exemple que le diamètre intérieur de la deuxième électrode de mesure 2 soit de 76 mm (ce qui signifie que ladite deuxième électrode a dans cet exemple une épaisseur radiale de 2,0 mm), tandis que le diamètre extérieur de la troisième électrode de mesure 3 soit de 50 mm, de sorte que le rapport du diamètre de la deuxième électrode de mesure 2 sur la troisième électrode de mesure 3 est de 1,5 environ.

De même, il est choisi dans cet exemple que le diamètre intérieur de la troisième électrode de mesure 3 soit de 47 mm (ce qui signifie que ladite troisième électrode a dans cet exemple une épaisseur radiale de 1,5 mm), tandis que le diamètre extérieur de la quatrième électrode de mesure 4 soit de 30 mm, de sorte que le rapport du diamètre de la troisième électrode de mesure 3 sur la quatrième électrode de mesure 4 est de 1,6 environ.

Enfin, il est choisi dans cet exemple que le diamètre intérieur de la quatrième électrode de mesure 4 soit de 28 mm (ce qui signifie que ladite quatrième électrode a dans cet exemple une épaisseur radiale de 1,0 mm), tandis que le diamètre extérieur de la cinquième électrode de mesure 5 (i.e. le diamètre extérieur du noyau central) soit de 15 mm, de sorte que le rapport du diamètre de la quatrième électrode de mesure 4 sur la cinquième électrode de mesure 5 est de 1,9 environ.

Il en résulte également que, selon cet exemple, le rapport du diamètre intérieur de la première électrode de mesure 1 sur le diamètre extérieur de la cinquième électrode de mesure 5 (i.e. le rapport des diamètres entre les deux électrodes de mesure extrémales de la manchette 10 du capteur) est de 8,1 environ, donc compris dans la plage préférentielle [5 ; 20] précédemment évoquée.

En outre, il est choisi dans cet exemple que la longueur axiale des électrodes de mesure le long de leur axe commun (qui correspond dans cet exemple à la distance entre les deux extrémités axiales des électrodes de mesure intermédiaires 2 à 4) est de 55 mm, de sorte que le rapport de ladite longueur axiale sur le diamètre intérieur de la première électrode de mesure 1 est de 0,5 environ, donc compris dans la plage préférentielle [0,25 ; 1] précédemment évoquée.

Par ailleurs, chaque électrode de mesure 1 à 5 est réalisée en une matière électriquement conductrice. On peut ainsi en particulier opter pour du laiton ou encore de l'acier inoxydable, ce dernier étant d'ailleurs préconisé lorsque la manchette est destinée à être intégrée dans une ligne d'écoulement cryogénique, par exemple une ligne d'écoulement de LH2 à une température voisine de 20K.

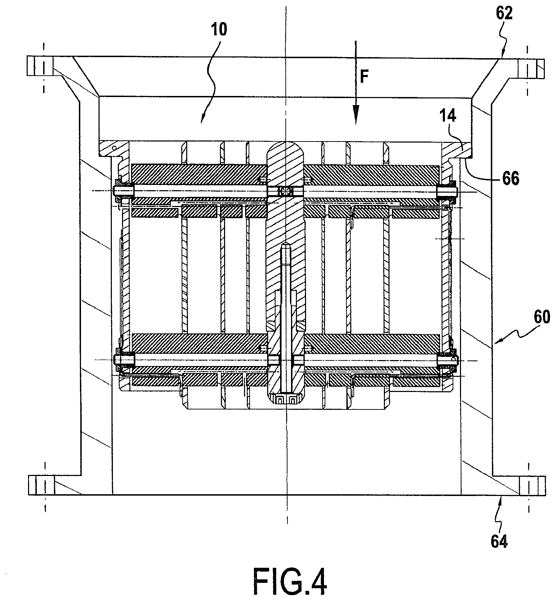

En effet, comme illustré en particulier à la figure 4, la manchette 10 du capteur est apte à être disposée dans toute ligne d'écoulement dans laquelle s'écoule un fluide, dans le flux F du fluide.

Selon cet exemple, la manchette 10 est apte à être disposée à l'intérieur d'un tronçon de conduite 60 que comprend la ligne d'écoulement.

Le corps extérieur de la manchette 10 comporte un premier élément de fixation apte à coopérer avec un deuxième élément de fixation que comporte le tronçon de conduite 60 pour fixer la manchette 10 dans le tronçon de conduite 60.

En particulier, le corps extérieur de la manchette 10 comporte une bride 14 en tant que premier élément de fixation qui est apte à venir en appui sur un épaulement 66 en tant que deuxième élément de fixation formé dans la paroi intérieure du tronçon de conduite 60, de manière à permettre la fixation de la manchette 10 dans le tronçon de conduite 60 par l'intermédiaire de vis (non représentées) aptes à traverser des trous de passage 16 ménagés dans la bride 14 (voir en particulier les figures 1 et 2) pour venir en prise dans l'épaulement 66.

Le tronçon de conduite 60 comporte deux brides 62 et 64 formées respectivement à ses deux extrémités axiales de manière à pouvoir être disposé entre deux autres tronçons de conduite (non représentés) que comporte la ligne d'écoulement.

Selon une alternative avantageuse à l'exemple illustré, on pourrait prévoir, sans sortir du cadre de la présente invention, que le corps extérieur de la manchette du capteur forme lui-même un tronçon de conduite apte à être disposé directement entre deux autres tronçons de conduite de la ligne d'écoulement. Cette alternative permet de diminuer la restriction d'écoulement que provoque la présence de la manchette du capteur au sein de la ligne d'écoulement.

Le corps extérieur de la manchette peut dès lors avantageusement comprendre deux brides analogues aux brides 62 et 64 que comporte le tronçon de conduite 60 précédemment décrit.

Par ailleurs, comme illustré en particulier aux figures 2 et 3, les électrodes de mesure 1 à 5 de la manchette 10 s'étendent à distance les unes des autres par l'intermédiaire d'entretoises 20 qui sont entièrement réalisées en matière électriquement isolante, en particulier en PTFE, et se présentent globalement sous la forme d'ailettes.

Plus particulièrement, la manchette 10 comprend quatre premières entretoises 20 du côté amont de la manchette 10 qui sont disposées en croix autour du noyau central de manière à s'étendre respectivement dans quatre directions radiales à 90 degrés les unes des autres entre le noyau central et le corps extérieur de la manchette 10.

La manchette 10 comprend en outre quatre autres entretoises 20 du côté aval de la manchette 10 qui sont analogues aux quatre premières entretoises, et qui s'étendent entre le noyau central et le corps extérieur de la manchette 10 respectivement dans les quatre mêmes directions radiales que celles des quatre premières entretoises.

Chaque entretoise 20 est positionnée par l'intermédiaire d'une tige de maintien 30 qui traverse un trou de passage que présente ladite entretoise 20 pour venir se fixer d'une part sur le noyau central et d'autre part sur le corps extérieur 1 de la manchette 10.

Selon l'exemple illustré, les deux extrémités de chaque tige de maintien 30 sont filetées de manière à pouvoir se fixer d'une part sur le noyau central par vissage dans un trou taraudé de ce dernier, d'autre part sur le corps extérieur 1 par vissage d'un écrou 31 venant en appui sur la paroi extérieure du corps extérieur 1, sur le bord d'un trou de passage que présente le corps extérieur 1 pour que la tige de maintien dépasse à l'extérieur de ce dernier dans la direction radiale de la manchette 10.

Chaque entretoise 20 vient en butée contre le noyau central.

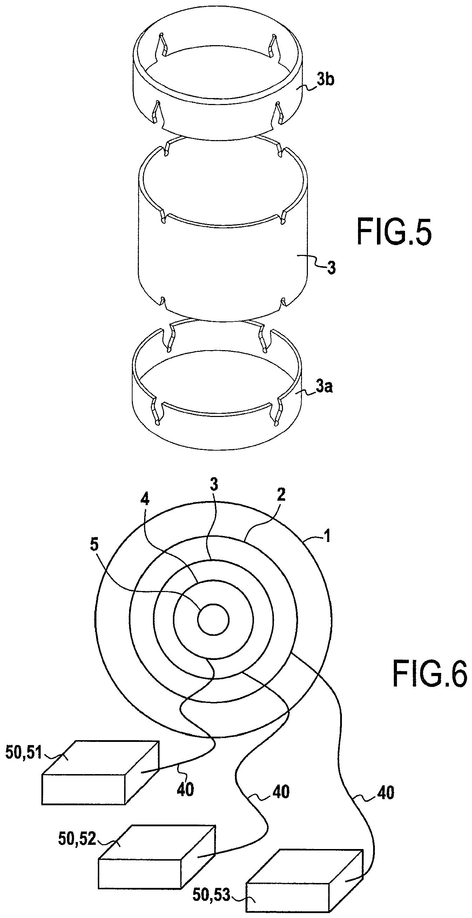

Par ailleurs, comme illustré à la figure 5 en particulier pour l'électrode de mesure 3, les deux extrémités axiales de chaque électrode de mesure intermédiaire 2 à 4 (i.e. les deux extrémités de ladite électrode qui sont espacées dans la direction axiale de ladite électrode) présentent quatre encoches régulièrement espacées radialement dans lesquelles les quatre entretoises côté aval et les quatre entretoises côté amont sont respectivement aptes à venir s'engager pour maintenir ladite électrode de mesure 2 à 4 à distance, dans la direction radiale de la manchette, des autres électrodes de mesure 1 à 5 qui lui font face.

En outre, comme illustré aux figures 3 et 5, la manchette 10 du capteur comporte des électrodes de garde 2a à 4a, 2b à 4b qui prolongent les extrémités des électrodes de mesure 2 à 4 en étant électriquement dissociées de ces dernières.

Plus particulièrement, les deux extrémités axialement opposées (i.e. côté amont et aval de la manchette 10) des trois électrodes de mesure intermédiaires 2 à 4 sont prolongées à distance, dans la direction axiale de la manchette, respectivement par trois électrodes de garde 2b à 4b côté amont et trois électrodes de garde 2a à 4a côté aval.

Lesdites électrodes de garde côté amont 2b à 4b sont électriquement dissociées des électrodes de mesure intermédiaires 2 à 4 qu'elles prolongent en étant fixées sur les entretoises 20 côté amont, du côté opposé dans la direction axiale de la manchette 10 au côté auquel sont fixées lesdites électrodes de mesure intermédiaires 2 à 4.

De même, lesdites électrodes de garde côté aval 2a à 4a sont électriquement dissociées des électrodes de mesure intermédiaires 2 à 4 qu'elles prolongent en étant fixées sur les entretoises 20 côté aval, du côté opposé dans la direction axiale de la manchette 10 au côté auquel sont fixées lesdites électrodes de mesure intermédiaires 2 à 4.

Pour ce faire, comme illustré en particulier pour les deux électrodes de garde 3a et 3b de l'électrode de mesure intermédiaire 3, une des deux extrémités axiales de chaque électrode de garde 2a à 4a, 2b à 4b présente quatre encoches régulièrement espacées radialement dans lesquelles les quatre entretoises 20 correspondantes sont respectivement aptes à venir s'engager pour maintenir ladite électrode de garde à distance, dans la direction axiale de la manchette 10, des électrodes de mesure et à distance, dans la direction radiale de la manchette 10, des autres électrodes de garde qui lui font face.

Les électrodes de garde 2a à 4a, 2b à 4b sont en matière électriquement conductrice, par exemple en laiton ou de préférence en acier inoxydable lorsque la manchette 10 est destinée à être traversée par un fluide cryogénique.

En outre, selon l'exemple illustré et non limitativement, les deux électrodes de mesure 1 et 5 les plus éloignées l'une de l'autre dans la direction radiale de la manchette 10 (i.e. respectivement le corps extérieur et le noyau central de la manchette 10) sont reliées électriquement d'une part entre elles et d'autre part à une ligne de potentiel électrique fixe du capteur, en particulier à la masse de ce dernier.

En effet, selon cet exemple, les tiges de maintien 30 sont en matière électriquement conductrice, en particulier en laiton ou en acier inoxydable, et établissent un lien électrique entre d'une part le noyau central en venant en prise dans ce dernier, et d'autre part avec le corps extérieur 1 de la manchette 10 par l'intermédiaire des écrous 31 qui sont eux aussi prévus en matière électriquement conductrice, en particulier en laiton ou en acier inoxydable.

Selon l'exemple illustré, ces deux électrodes extrémales 1 et 5 jouent indifféremment le rôle d'électrodes de mesure et d'électrodes de garde.

Le corps extérieur 1 est prévu monobloc dans l'exemple illustré.

Selon l'exemple illustré, le noyau central est tronçonné dans la direction axiale en plusieurs tronçons dissociés aptes à être assemblées entre eux pour former ledit noyau central.

Selon l'exemple illustré à la figure 3, le noyau central comporte un premier tronçon 5 qui constitue l'électrode de mesure 5 proprement dite et dans laquelle viennent se fixer les tiges de maintien 30 côté amont ; un deuxième tronçon 5a dans lequel viennent se fixer les tiges de maintien 30 côté aval ; une cale (optionnelle) qui vient s'interposer axialement entre lesdits premier et deuxième tronçons ; et une vis d'assemblage 12 apte à traverser un trou de passage du deuxième tronçon 5a pour venir en prise dans un trou taraudé du premier tronçon 5.

On pourrait toutefois prévoir, sans sortir du cadre de la présente invention, un noyau central monobloc.

Par ailleurs, comme illustré en particulier aux figures 3 et 4, les entretoises 20 présentent des passages 25 à l'intérieur desquels des fils de liaison 40 sont introduits de manière à assurer d'une part le couplage entre les électrodes de mesure 1 à 5 et les organes de commutation et de mesure 50 qui seront décrits ultérieurement, et d'autre part le couplage entre les électrodes de garde 2a à 4a, 2b à 4b et lesdits organes de commutation et de mesure 50.

En particulier, le passage 25 de chaque entretoise 20 traverse au moins en partie ladite entretoise 20, et débouche en plusieurs lieux se situant respectivement dans les espaces de subdivision A à D de manchette 10.

En outre, chaque fil de liaison 40 en provenance de l'extérieur de la manchette 10 passe à l'intérieur du corps extérieur 1 en traversant un orifice ménagé dans ledit corps 1 (en particulier à proximité d'un lieu de fixation d'un écrou 31) pour s'introduire à l'intérieur d'un passage correspondant 25 d'une entretoise 20 correspondante et venir finalement déboucher dans l'espace de subdivision A à D correspondant, à proximité de l'électrode de mesure ou de garde à laquelle il est destiné à être relié.

Par ailleurs, au moins un des éléments constitutifs de la manchette 10 du capteur peut avantageusement être profilé de manière à minimiser les pertes de charge de l'écoulement à l'entrée et/ou la sortie de la manchette 10.

Selon l'exemple illustré, au moins l'une des deux extrémités axiales du noyau central, en particulier celle du côté amont de la manchette 10 (qui est référencée 5b sur la figure 1), est prévue arrondie.

En outre, l'extrémité axiale de chaque électrode de garde 2a à 4a, 2b à 4b, qui est du côté opposé dans la direction axiale au côté où se trouve l'électrode de mesure 2 à 4 que ladite électrode de garde prolonge, est selon cet exemple également prévue profilée.

Par ailleurs, comme illustré en particulier à la figure 1, au moins les entretoises 20 du côté amont de la manchette 10 (en particulier également les entretoises 20 du côté aval de la manchette 10) sont elles aussi profilées.

En particulier, chaque entretoise 20 a sensiblement une section triangulaire dont le sommet est aligné avec le plan radial matérialisant la direction dans laquelle ladite entretoise 20 s'étend, et pointe du côté opposé dans la direction axiale au côté où se trouvent les électrodes de mesure 2 à 4.

On va à présent décrire les différentes étapes d'assemblage de la manchette 10 du capteur en atelier.

La première étape consiste à faire passer les fils de liaison 40 depuis l'extérieur à travers les orifices du corps extérieur 1 de la manchette 10.

La deuxième étape consiste, pour chaque entretoise 20, à faire passer les fils de liaison 40 correspondants à travers le passage 25 de ladite entretoise 20, et faire ressortir chaque fil de liaison 40 par celle des parties débouchantes dudit passage 25 qui lui correspond de manière à ce que ce fil 40 débouche dans celui des espaces de subdivision A à D qui lui est associé.

La troisième étape consiste à faire passer les quatre premières tiges de maintien 30 respectivement dans les quatre entretoises 20 du côté amont de la manchette 10, à visser lesdites tiges 30 sur le premier tronçon 5 du noyau central, et à visser les écrous 31 correspondants sur le corps extérieur 1.

La quatrième étape consiste à introduire et fixer la troisième électrode de mesure intermédiaire 4 dans la manchette 10, à introduire et fixer l'électrode de garde associée 4b du côté amont de la manchette 10, et à souder les fils de liaison 40 correspondants qui débouchent des entretoises 20 associées.

La cinquième étape consiste à répéter la quatrième étape pour la deuxième électrode de mesure intermédiaire 3 et son électrode de garde côté amont associée 3b, puis pour la première électrode de mesure intermédiaire 2 et son électrode de garde côté amont associée 2b.

La sixième étape consiste à positionner la cale du noyau central sur son premier tronçon 5, à positionner le deuxième tronçon 5a, et à fixer ces deux tronçons ensemble par l'intermédiaire de la vis 12.

La septième étape consiste à faire passer les quatre dernières tiges de maintien 30 respectivement dans les quatre entretoises 20 du côté aval de la manchette 10, à visser lesdites tiges 30 sur le deuxième tronçon 5a du noyau central, et à visser les écrous 31 correspondants sur le corps extérieur 1.

La dernière étape consiste à mettre en place les trois électrodes de garde 2a à 4a du côté aval de la manchette 10, d'une manière analogue à celle décrite aux quatrième et cinquième étapes.

On va à présent décrire des organes de commutation et de mesure 50 conformes à la présente invention.

Selon l'exemple illustré, le capteur est un capteur capacitif.

Selon cet exemple, le fluide circulant dans la ligne d'écoulement est un fluide diphasique électriquement isolant.

Comme illustré à la figure 6, les organes de commutation et de mesure 50 comprennent un ou plusieurs conditionneurs capacitifs (en particulier trois 51 à 53) dissociés qui sont reliés, au choix, à une, plusieurs, ou chacune des électrodes de mesure de la manchette 10 (en particulier aux trois électrodes de mesure intermédiaires 2 à 4 par l'intermédiaire de fils de liaison 40, respectivement).

Chaque conditionneur 51 à 53 comporte un premier générateur de tension qui délivre une première tension électrique V1 ; et un deuxième générateur de tension qui délivre une deuxième tension électrique V1' qui est indépendante de la première tension V1 mais qui est à tout instant identique à cette dernière.

En particulier, le premier générateur est configuré pour que la première tension V1 qu'il délivre soit variable en régime permanent de fréquence f1, d'amplitude A1 et de phase P1.

De même, le deuxième générateur est configuré pour que la deuxième tension V1' qu'il délivre soit variable en régime permanent de fréquence f1', d'amplitude A1' et de phase P1', et vérifie à tout instant les trois conditions suivantes : f1'=f1 ; A1'=A1 ; et P1'=P1.

En outre, chaque conditionneur 51 à 53 comporte un circuit de commutation configuré pour commuter entre :
- un premier état E1 dans lequel ledit conditionneur délivre en une première sortie la première tension V1, et en une deuxième sortie la deuxième tension V1' ;
- un deuxième état E0 dans lequel les premier et deuxième générateurs dudit conditionneur sont court-circuités de manière à ce que lesdites première et deuxième sorties délivrent toutes deux une tension de court-circuit correspondant à un potentiel fixe V0 dudit conditionneur, en particulier la masse du capteur.

Par ailleurs, chaque conditionneur 51 à 53 comporte un circuit de mesure du courant débité dans ledit premier générateur.

En outre, les lignes de potentiel fixe V0 de chacun des conditionneurs 51 à 53 sont reliées entre elles de manière à ce qu'ils délivrent des tensions de court-circuit identiques dans leurs deuxièmes états E0 respectifs.

Par ailleurs, les conditionneurs 51 à 53 sont synchronisés de manière à ce que les tensions V1 et V1' qu'ils délivrent dans leurs premiers états respectifs E1 aient à tout instant les mêmes phases.

De même, les conditionneurs 51 à 53 sont choisis de manière à ce que, dans leurs premier états respectifs E1, les tensions V1 et V1' qu'ils délivrent aient des amplitudes et des fréquences les plus proches possibles, en théorie des amplitudes et des fréquences identiques.

Les organes de commutation et de mesure 50 sont couplés aux électrodes de mesure 1 à 5, en particulier par l'intermédiaire des fils de liaison 40 précédemment décrits.

Plus particulièrement, les deux électrodes de mesure 1 et 5 les plus éloignées l'une de l'autre de la manchette 10 sont toutes deux reliées électriquement à la même ligne de potentiel électrique fixe V0 que chacun des conditionneurs 51 à 53 (en particulier la masse du capteur qui est alors commune aux organes de commutation et de mesure et à la manchette).

D'un autre côté, les premières sorties respectives des trois conditionneurs 51 à 53 sont respectivement reliées aux trois électrodes de mesure intermédiaires 4, 3 et 2.

Par ailleurs, selon cet exemple, les organes de commutation et de mesure 50 sont couplés aux électrodes de garde 2a à 4a et 2b à 4b, en particulier par l'intermédiaire des fils de liaison 40 précédemment décrits, de manière à ce que lesdites électrodes de garde soient à tout instant au même potentiel électrique que les électrodes de mesure 2 à 4 qu'elles prolongent respectivement.

Pour ce faire, les deuxièmes sorties respectives des trois conditionneurs 51 à 53 sont respectivement reliées, d'une part aux trois électrodes de garde du côté amont de la manchette 4b, 3b et 2b, et d'autre part aux trois électrodes de garde du côté aval de la manchette 4a, 3a, 2a.

On comprend dès lors que les organes de commutation et de mesure 50 sont ainsi aptes à commander la commutation de chaque espace de subdivision A à D de la manchette 10 entre un état mesurant et un état non mesurant.

Plus précisément, ledit état mesurant d'un espace de subdivision considéré est obtenu lorsque, par le jeu des commutations des conditionneurs 51 à 53 entre leurs premier et deuxième états E1 et E0 respectifs, la première tension V1 est appliquée à une première des deux électrodes de mesure adjacentes délimitant ledit espace de subdivision considéré, tandis que le potentiel fixe V0 est appliqué à l'autre desdites deux électrodes de mesure adjacentes, de telle sorte qu'un signal électrique d'excitation correspondant à la différence de potentiel V1-V0 soit appliqué entre lesdites deux électrodes de mesure adjacentes.

En outre, dans ledit état mesurant dudit espace de subdivision considéré, le circuit de mesure du conditionneur qui est relié à ladite première des deux électrodes de mesure adjacentes mesure le courant électrique débité dans le premier générateur dudit conditionneur en tant que valeur représentative du signal électrique de réception résultant de l'application dudit signal électrique d'excitation, de manière à pouvoir déterminer la teneur en gaz du fluide qui est associée à cette valeur représentative.

Par ailleurs, ledit état non mesurant d'un espace de subdivision considéré est obtenu lorsque, par le jeu des commutations des conditionneurs 51 à 53 entre leurs premier et deuxième états E1 et E0 respectifs, les deux électrodes de mesure adjacentes délimitant ledit espace de subdivision considéré sont portées à un même potentiel V1 ou V0.

Par ailleurs, puisque les conditionneurs 51 à 53 sont dissociés, chacun d'entre eux peut commuter entre son premier état E1 et son deuxième état E0 indépendamment des autres conditionneurs 51 à 53.

On comprend dès lors que les organes de commutation et de mesure 50 sont configurés pour sélectivement commuter l'état de chacun des espaces de subdivision A à D indépendamment les uns des autres.

En outre, on peut piloter les conditionneurs 51 à 53, par exemple informatiquement, pour définir un cycle de mesure au cours duquel lesdits conditionneurs commutent séquentiellement au moins une fois l'état d'au moins un des espaces de subdivision A à D.

Par exemple, on peut réaliser le cycle de mesure qui va à présent être décrit.

A un premier instant t1 du cycle de mesure, on applique, par le jeu des commutations des conditionneurs, les potentiels suivants aux électrodes de mesure 1 à 5 de la manchette 10 du capteur :

| Electrode de mesure | 1 | 2 | 3 | 4 | 5 |
|---|---|---|---|---|---|
| Potentiel | V0 | V1 | V1 | V1 | V0 |

On constate dès lors qu'une tension électrique d'excitation V1-V0 est appliquée entre les deux électrodes adjacentes 1 et 2 délimitant le premier espace de subdivision A. Par conséquent, ce premier espace A est dans son état mesurant.

Le conditionneur correspondant mesure le courant débité dans son premier générateur.

Etant donné que les deux électrodes 2 et 3 délimitant l'espace de subdivision adjacent B sont toutes deux portées au même potentiel V1, ledit espace adjacent B est dans son état non mesurant.

Par conséquent, le courant débité dans l'électrode de mesure 2 est représentative uniquement de la tension de réception résultant de l'application de la tension d'excitation appliquée entre les deux électrodes adjacentes 1 et 2. Il en résulte que ledit courant électrique mesuré a une amplitude et/ou un décalage de phase par rapport à ceux de la tension V1 délivrée par le premier générateur du conditionneur correspondant dont les valeurs dépendent directement de la constante diélectrique du fluide s'écoulant spécifiquement dans le premier espace de subdivision A. Ainsi, lors de ce premier instant t1, il est possible de déterminer directement le taux de bulles de gaz se formant spécifiquement dans le premier espace de subdivision A.

Il en est de même pour le quatrième espace de subdivision D, puisqu'une tension d'excitation V1-V0 est également appliquée entre les deux électrodes adjacentes délimitant ledit espace D, tandis que l'espace de subdivision adjacent C est dans son état non mesurant.

En définitive, au cours de ce premier instant t1, on obtient simultanément le taux de bulles de gaz se formant spécifiquement dans le premier espace de subdivision A et dans le quatrième espace de subdivision D.

Ensuite, à un deuxième instant t2 ultérieur du cycle de mesure, on commute uniquement l'état du conditionneur 53 relié à la deuxième électrode de mesure 2, qui passe de son premier état E1 à son deuxième état E0. On obtient dès lors la configuration suivante :

| Electrode de mesure | 1 | 2 | 3 | 4 | 5 |
|---|---|---|---|---|---|
| Potentiel | V0 | V0 | V1 | V1 | V0 |

Ainsi, au cours de ce deuxième instant t2, on obtient simultanément le taux de bulles de gaz se formant spécifiquement dans le deuxième espace de subdivision B et dans le quatrième espace de subdivision D.

Ensuite, à un troisième instant t3 ultérieur du cycle de mesure, on commute l'état du conditionneur 53 relié à la deuxième électrode de mesure 2, qui passe de son deuxième état E0 à son premier état E1, de même que l'état du conditionneur 51 relié à la quatrième électrode de mesure 4, qui passe de son premier état E1 à son deuxième état E0. On obtient dès lors la configuration suivante :

| Electrode de mesure | 1 | 2 | 3 | 4 | 5 |
|---|---|---|---|---|---|
| Potentiel | V0 | V1 | V1 | V0 | V0 |

Ainsi, au cours de ce troisième instant t3, on obtient simultanément le taux de bulles de gaz se formant spécifiquement dans le premier espace de subdivision A et dans le troisième espace de subdivision C.

On comprend dès lors qu'en seulement trois commutations des conditionneurs au cours d'une simple séquence à trois étapes on peut déterminer le taux de bulles de gaz se formant spécifiquement dans chacun des espaces de subdivision A à D de la section d'écoulement de la manchette 10 du capteur, lesquels espaces A à D adoptent chacun au moins une fois leurs états mesurant respectifs au cours du cycle de mesure.

Par ailleurs, on remarque que, selon cet exemple de cycle de mesure, les espaces de subdivision A et D adoptent leurs états mesurant respectifs un plus grand nombre de fois que les deux autres espaces de subdivision B et C (en particulier deux fois contre une fois).

En outre, le cycle de mesure peut avantageusement mais non nécessairement comporter au moins une quatrième étape de vérification de la linéarité des mesures du capteur.

Plus particulièrement, on peut ajouter au cycle de mesure un quatrième instant t4 ultérieur au troisième instant t3 au cours duquel on obtient la configuration suivante :

| Electrode de mesure | 1 | 2 | 3 | 4 | 5 |
|---|---|---|---|---|---|
| Potentiel | V0 | V1 | V0 | V1 | V0 |

Ainsi, au cours de ce quatrième instant t4, les premier espaces de subdivision A et B, qui sont adjacents, sont tous deux dans leur état mesurant.

Il en résulte que le courant débité dans le conditionneur 53 relié à la deuxième électrode de mesure de la manchette, qui est l'électrode commune à ces deux espaces A et B, comporte une première composante qui est représentative de la constante diélectrique du premier espace A, et une deuxième composante qui est représentative de la constante diélectrique du deuxième espace B. On comprend ainsi que le courant que mesure ledit conditionneur 53 permet de déterminer le taux de bulles de gaz se formant dans l'espace de réunion A+B constitué par le premier espace A et le deuxième espace B.

Similairement, le courant que mesure le conditionneur 51 relié à la quatrième électrode 4 au cours de ce quatrième instant t4 permet de déterminer le taux de bulles de gaz se formant dans l'espace de réunion C+D constitué par le troisième espace C et le quatrième espace D.

De même, le courant que mesure le conditionneur 52 relié à la troisième électrode 3 au cours de ce quatrième instant t4 permet de déterminer le taux de bulles de gaz se formant dans l'espace de réunion B+C constitué par le deuxième espace B et le troisième espace C.

## Revendications

1. Capteur pour déterminer la teneur en gaz d'un fluide diphasique circulant dans une ligne d'écoulement, le capteur comprenant une manchette (10) apte à être disposée dans la ligne d'écoulement, dans le flux (F) du fluide,
**caractérisé en ce que**
la manchette (10) du capteur comprend une pluralité d'électrodes de mesure (1-5) qui s'étendent à distance et en regard les unes des autres de manière à délimiter deux à deux plusieurs espaces de subdivision (A-D) de la section d'écoulement de ladite manchette (10),
le capteur comprend en outre des organes de commutation et de mesure (50) qui sont couplés aux électrodes de mesure (1-5) de manière à commander la commutation de chaque espace de subdivision (A-D) de la manchette (10) entre d'une part un état mesurant dans lequel lesdits organes (50) appliquent un signal électrique d'excitation entre les deux électrodes de mesure adjacentes délimitant un espace de subdivision considéré et mesurent une valeur représentative du signal électrique de réception résultant de l'application dudit signal électrique d'excitation pour déterminer la teneur en gaz du fluide qui est associée à cette valeur représentative, et d'autre part un état non mesurant,
et les organes de commutation et de mesure (50) sont configurés pour sélectivement commuter l'état de chacun des espaces de subdivision (A-D) indépendamment les uns des autres.

2. Capteur selon la revendication 1, **caractérisé en ce que** les organes de commutation et de mesure (50) appliquent un même potentiel électrique aux deux électrodes de mesure adjacentes délimitant l'espace de subdivision considéré pour que cet espace adopte son état non mesurant.

3. Capteur selon la revendication 1, **caractérisé en ce que** les organes de commutation et de mesure (50) coupent toute liaison électrique entre les deux électrodes de mesure adjacentes délimitant l'espace de subdivision considéré pour que cet espace adopte son état non mesurant.

4. Capteur selon l'une quelconque des revendications 1 à 3, **caractérisé en ce que** les organes de commutation et de mesure (50) commutent séquentiellement au moins une fois l'état d'au moins un des espaces de subdivision (A-D) au cours d'un cycle de mesure.

5. Capteur selon la revendication 4, **caractérisé en ce que** chaque espace de subdivision (A-D) adopte au moins une fois son état mesurant au cours du cycle de mesure.

6. Capteur selon la revendication 4 ou 5, **caractérisé en ce qu'**au cours du cycle de mesure, au moins un premier des espaces de subdivision adopte son état mesurant pendant qu'un autre espace de subdivision adjacent au premier adopte son état non mesurant.

7. Capteur selon l'une quelconque des revendications 1 à 6, **caractérisé en ce que** la manchette (10) du capteur comporte des électrodes de garde (2a-4a, 2b-4b) qui prolongent les extrémités des électrodes de mesure (2-4) en étant électriquement dissociées de ces dernières, et qui sont couplées aux organes de commutation et de mesure (50) de manière à ce que les électrodes de garde (2a-4a, 2b-4b) soient à tout instant au même potentiel électrique que les électrodes de mesure (2-4) qu'elles prolongent respectivement.

8. Capteur selon l'une quelconque des revendications 1 à 7, **caractérisé en ce que** les électrodes de mesure (1-5) s'étendent à distance les unes des autres par l'intermédiaire d'entretoises (20) au moins en partie en matière électriquement isolante.

9. Capteur selon la revendication 8, **caractérisé en ce que** les entretoises (20) présentent des passages (25) à l'intérieur desquels des fils de liaison (40) sont introduits de manière à assurer le couplage entre les électrodes de mesure (1-5) et les organes de commutation et de mesure (50).

10. Capteur selon l'une quelconque des revendications 1 à 9, **caractérisé en ce que** les électrodes de mesure (1-5) sont planes et parallèles entre elles.

11. Capteur selon l'une quelconque des revendications 1 à 9, **caractérisé en ce que** les électrodes de mesure (1-5) sont coaxiales, encloses les unes dans les autres autour d'un axe commun, et présentent une section circulaire dans un plan de section perpendiculaire à l'axe commun.

12. Capteur selon la revendication 11, **caractérisé en ce que** les électrodes de mesure (1-5) sont tronconiques.

13. Capteur selon la revendication 11, **caractérisé en ce que** les électrodes de mesure (1-5) sont cylindriques.

14. Capteur selon l'une quelconque des revendications 11 à 13, **caractérisé en ce que** le rapport des diamètres de deux électrodes de mesure adjacentes dans le plan de section est compris entre 1,1 et 3,0, de préférence entre 1,4 et 2,0.

15. Capteur selon l'une quelconque des revendications 1 à 14, **caractérisé en ce que** la manchette (10) comprend entre 3 et 6 électrodes de mesure.

## Patentansprüche

1. Sensor zur Bestimmung des Gasgehaltes eines in einer Strömungsleitung fließenden Zweiphasenfluids, wobei der Sensor eine Manschette (10) umfasst, die geeignet ist, in der Strömungsleitung in dem Strom (F) des Fluids angeordnet zu werden,
**dadurch gekennzeichnet, dass**
die Manschette (10) des Sensors eine Vielzahl von Messelektroden (1-5) umfasst, die sich im Abstand voneinander und einander gegenüberliegend erstrecken, um paarweise mehrere Räume zur Unterteilung (A-D) des Strömungsquerschnitts der Manschette (10) zu begrenzen,
der Sensor ferner Umschalt- und Messorgane (50) umfasst, die mit den Messelektroden (1-5) gekoppelt sind, um die Umschaltung eines jeden Unterteilungsraumes (A-D) der Manschette (10) zu steuern, zwischen einerseits einem Mess-Zustand, in dem die Organe (50) ein elektrisches Erregungssignal zwischen den beiden benachbarten Messelektroden, welche einen betrachteten Unterteilungsraum begrenzen, anlegen und einen Wert, der für das aus dem Anlegen des elektrischen Erregungssignals resultierende elektrische Empfangssignal repräsentativ ist, messen, um den Gasgehalt des Fluids, der diesem repräsentativen Wert zugeordnet ist, zu bestimmen, und andererseits einem Nichtmess-Zustand,
und die Umschalt- und Messorgane (50) dazu ausgelegt sind, den Zustand eines jeden der Unterteilungsräume (A-D) unabhängig voneinander selektiv umzuschalten.

2. Sensor nach Anspruch 1, **dadurch gekennzeichnet, dass** die Umschalt- und Messorgane (50) ein gleiches elektrisches Potential an die beiden benachbarten Messelektroden, welche den betrachteten Unterteilungsraum begrenzen, anlegen, damit dieser Raum seinen Nichtmess-Zustand annimmt.

3. Sensor nach Anspruch 1, **dadurch gekennzeichnet, dass** die Umschalt- und Messorgane (50) jede elektrische Verbindung zwischen den beiden benachbarten Messelektroden, welche den betrachteten Unterteilungsraum begrenzen, unterbrechen, damit dieser Raum seinen Nichtmess-Zustand annimmt.

4. Sensor nach einem der Ansprüche 1 bis 3, **dadurch gekennzeichnet, dass** die Umschalt- und Messorgane (50) den Zustand von wenigstens einem der Unterteilungsräume (A-D) im Laufe eines Messzyklus wenigstens einmal sequentiell umschalten.

5. Sensor nach Anspruch 4, **dadurch gekennzeichnet, dass** jeder Unterteilungsraum (A-D) seinen Mess-Zustand im Laufe des Messzyklus wenigstens einmal annimmt.

6. Sensor nach Anspruch 4 oder 5, **dadurch gekennzeichnet, dass** im Laufe des Messzyklus wenigstens ein erster der Unterteilungsräume seinen Mess-Zustand annimmt, während ein anderer, zu dem ersten benachbarter Unterteilungsraum seinen Nichtmess-Zustand annimmt.

7. Sensor nach einem der Ansprüche 1 bis 6, **dadurch gekennzeichnet, dass** die Manschette (10) des Sensors Schutzelektroden (2a-4a-, 2b-4b) umfasst, die die Enden der Messelektroden (2-4) fortsetzen und dabei von letzteren elektrisch getrennt sind und die mit den Umschalt- und Messorganen (50) gekoppelt sind, so dass die Schutzelektroden (2a-4a-, 2b-4b) zu jedem Zeitpunkt auf dem gleichen elektrischen Potential wie die Messelektroden (2-4), die sie jeweils fortsetzen, sind.

8. Sensor nach einem der Ansprüche 1 bis 7, **dadurch gekennzeichnet, dass** die Messelektroden (1-5) sich mittels Streben (20) wenigstens teilweise aus elektrisch isolierendem Material im Abstand voneinander erstrecken.

9. Sensor nach Anspruch 8, **dadurch gekennzeichnet, dass** die Streben (20) Durchgänge (25) aufweisen, in die Verbindungsdrähte (40) eingeführt sind, um die Kopplung zwischen den Messelektroden (1-5) et den Umschalt- und Messorganen (50) sicherzustellen.

10. Sensor nach einem der Ansprüche 1 bis 9, **dadurch gekennzeichnet, dass** die Messelektroden (1-5) eben und parallel zueinander sind.

11. Sensor nach einem der Ansprüche 1 bis 9, **dadurch gekennzeichnet, dass** die Messelektroden (1-5) koaxial sind, um eine gemeinsame Achse herum voneinander umgeben sind und einen kreisförmigen Querschnitt in einer Querschnittsebene senkrecht zu der gemeinsamen Achse aufweisen.

12. Sensor nach Anspruch 11, **dadurch gekennzeichnet, dass** die Messelektroden (1-5) kegelstumpfförmig sind.

13. Sensor nach Anspruch 11, **dadurch gekennzeichnet, dass** die Messeelektroden (1-5) zylindrisch sind.

14. Sensor nach einem der Ansprüche 11 bis 13, **dadurch gekennzeichnet, dass** das Verhältnis der Durchmesser von zwei benachbarten Messelektroden in der Querschnittsebene zwischen 1,1 und 3,0, vorzugsweise zwischen 1,4 und 2,0 beträgt.

15. Sensor nach einem der Ansprüche 1 bis 14, **dadurch gekennzeichnet, dass** die Manschette (10) zwischen 3 und 6 Messelektroden umfasst.

## Claims

1. A sensor for determining the gas content of a two-phase fluid flowing in a flow line, the sensor comprising a sleeve (10) configured to be arranged in the flow line, in the stream (F) of fluid, the sensor being **characterized in that**: the sleeve (10) of the sensor comprises a plurality of measurement electrodes (1-5) spaced apart from and in register with one another so that in pairs they define a plurality of subdivision spaces (A-D) subdividing the flow section of said sleeve (10); the sensor also comprises switch and measurement members (50) that are coupled to the measurement electrodes (1-5) in such a manner as to cause each subdivision space (A-D) of the sleeve (10) to switch between a measuring state in which said members (50) apply an excitation electrical signal between the two adjacent measurement electrodes defining a subdivision space under consideration and measure a value representative of the reception electrical signal resulting from applying said excitation electrical signal in order to determine the gas content of the fluid that is associated with said representative value, and a non-measuring state; and the switch and measurement members (50) are configured to selectively switch the state of each of the subdivision spaces (A-D) independently of one another.

2. A sensor according to claim 1, **characterized in that** the switch and measurement members (50) apply the same electric potential to the two adjacent measurement electrodes that define the subdivision space under consideration in order to cause said space to adopt its non-measuring state.

3. A sensor according to claim 1, **characterized in that** the switch and measurement members (50) interrupt all electrical connections between the two adjacent measurement electrodes defining the subdivision space under consideration in order to cause said space to adopt its non-measuring state.

4. A sensor according to any one of claims 1 to 3, **characterized in that** the switch and measurement members (50) sequentially switch the state of at least one of the subdivision spaces (A-D) at least once during a measurement cycle.

5. A sensor according to claim 4, **characterized in that** each subdivision space (A-D) adopts its measuring state at least once during the measurement cycle.

6. A sensor according to claim 4 or claim 5, **characterized in that** during the measurement cycle at least a first of the subdivision spaces adopts its measuring state while another subdivision space adjacent to the first adopts its non-measuring state.

7. A sensor according to any one of claims 1 to 6, **characterized in that** the sleeve (10) of the sensor includes guard electrodes (2a-4a, 2b-4b) that extend the ends of the measurement electrodes (2-4) while being electrically separate therefrom, and that are coupled to the switch and measurement members (50) in such a manner that the guard electrodes (2a-4a, 2b-4b) are at all times at the same electric potential as the measurement electrodes (2-4) that they extend respectively.

8. A sensor according to any one of claims 1 to 7, **characterized in that** the measurement electrodes (1-5) are spaced apart from one another by spacers (20) at least partly made of electrically insulating material.

9. A sensor according to claim 8, **characterized in that** the spacers (20) have passages (25) into which connection wires (40) are inserted so as to provide the coupling between the measurement electrodes (1-5) and the switch and measurement members (50).

10. A sensor according to any one of claims 1 to 9, **characterized in that** the measurement electrodes (1-5) are plane and parallel to one another.

11. A sensor according to any one of claims 1 to 9, **characterized in that** the measurement electrodes (1-5) are coaxial, surrounding one another about a common axis, and presenting a section that is circular in a section plane perpendicular to the common axis.

12. A sensor according to claim 11, **characterized in that** the measurement electrodes (1-5) are frustoconical.

13. A sensor according to claim 11, **characterized in that** the measurement electrodes (1-5) are cylindrical.

14. A sensor according to any one of claims 11 to 13, **characterized in that** the ratio of the diameters of two adjacent measurement electrodes in the section plane lies in the range 1.1 to 3.0, and preferably in the range 1.4 to 2.0.

15. A sensor according to any one of claims 1 to 14, **characterized in that** the sleeve (10) has three to six measurement electrodes.
